# EUROPEAN PATENT SPECIFICATION

(11) **EP 0 321 064 B1**
(45) Date of publication and mention of the grant of the patent: **22.12.1993**
(21) Application number: 88301775.8
(22) Date of filing: 01.03.1988
(51) Int. Cl.: B01D 29/085

(54) **Bottle filter**
Flaschenfiltriergerät
Filtre pour bouteilles

(30) Priority: 10.12.1987 US 131214
(43) Date of publication of application: 21.06.1989
(73) Proprietor: COSTAR CORPORATION, Cambridge Massachusetts 02139 (US)
(72) Inventor: Lyman, George, Cape Porpoise ME 04014 (US); Labriola, Anthony, Woburn, MA 01801 (US); Looney, Kevin, Bedford, MA 01720 (US)
(74) Representative: Read, Matthew Charles

(56) References cited:
- EP-A- 0 224 110
- DE-A- 3 220 121
- US-A- 2 449 238
- US-A- 4 251 366
- US-A- 4 301 010

## Description

This invention relates to laboratory filtration and more particularly comprises a new and improved bottle filter assembly. Bottle filters are frequently used in the laboratory to sterilize or clarify tissue culture media, biological fluids, additives, and other aqueous solutions.

Conventionally, bottle filters are sold together with bottles for collecting the filtered solutions. The bottles, of course, add to the cost of the bottle filter assemblies and increase the storage space required for them. The necks of the bottles are relatively large and usually match the diameters of the filter elements in the bottle filter assemblies. Very likely, the relationship between filter and bottle neck diameters developed out of the belief that it should appear that the filtrate takes a direct path through the filter into the bottle. Apparently, no special attention was given during filter assembly design to compactness in arranging the concentric elements of the filter assembly, and the diameters of the bottle necks assumed relatively large dimensions.

In a typical application, filter assemblies are used to add predetermined amounts of filtered serum, antibiotics or other liquid to a freshly opened bottle of sterile media. With conventional bottle filters, the technician pours liquid to be filtered into the funnel of the bottle filter assembly, attaches a vacuum line to the assembly, and waits for the filtered liquid to drain into the special filter bottle. The filtered liquid is then poured from the filter bottle into the media bottle.

A bottle filter assembly is known from US-A-4251366 and comprises a funnel having a side wall and a bottom wall and including a stem, extending from about an opening in the bottom wall, and a filter membrane grid support on the bottom wall; a filter membrane supported by the filter membrane grid support and a unitary adapter including an internally threaded portion for threadably engaging the threaded neck of a standard media bottle and outwardly extending nipple means for coupling the adaptor to a vacuum source so as to assist the flow of liquid through the filter membrane.

A bottle filter assembly according to the present invention is characterised, over filter assemblies of the above-described type, in that the adapter is inseparably coupled directly to the funnel and the funnel is of unitary construction.

The present invention allows the bottle filters to be used with containers which are presently found in virtually all laboratories where the filters are used and thereby provides a cost-savings for the users, reduces the storage space required for the assemblies and makes more efficient and convenient the use of the bottle filters in typical applications of the device.

With the present invention, the filter assembly may be screwed directly onto the media bottle so that the filtered liquid flows directly into it. No intermediate vessel is used and no residual filtered liquid is lost in the transfer.

In accordance with the present invention, the bottle filter has a unique adapter which enables the bottle filter to be mounted directly on standard 33mm neck bottles including 125ml, 500ml and 1000ml media bottles. These bottles are ordinarily available in substantial numbers in most laboratories, and the added expense of buying special bottles with the filter assemblies is avoided. Therefore, in other applications of the filter assembly, empty media bottles can be used as the filter bottles.

The invention will be better understood and appreciated from the following detailed description of one embodiment thereof, selected for purposes of illustration and shown in the accompanying drawings.
Figure 1 is an elevation view of the bottle filter assembly of this invention disposed on a standard media bottle;
Figure 2 is an enlarged elevation view, partly in cross-section, of the bottle filter assembly shown in Figure 1;
Figure 3 is a cross-sectional view of the filter assembly taken along section line 3-3 in Figure 2; and
Figures 4 and 5 are fragmentary cross-sectional view of the funnel of the filter assembly taken along the section lines 4-4 and 5-5 in Figure 3, respectively.

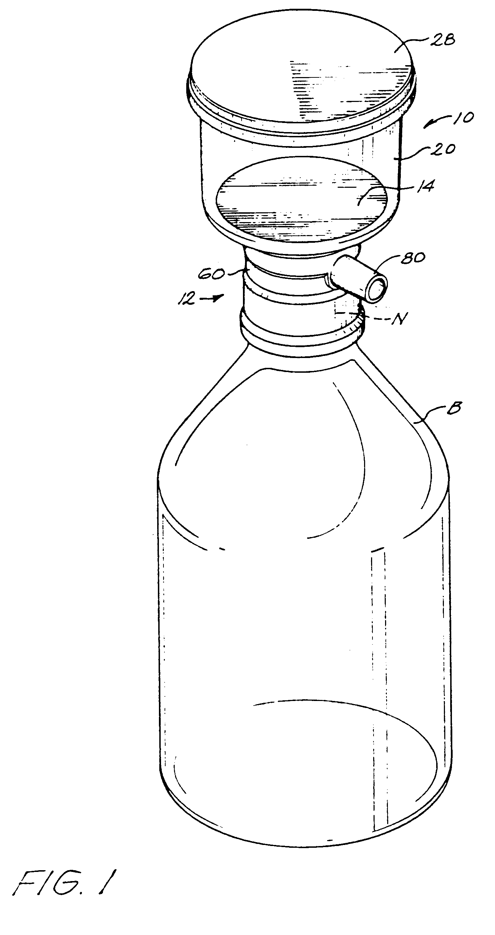

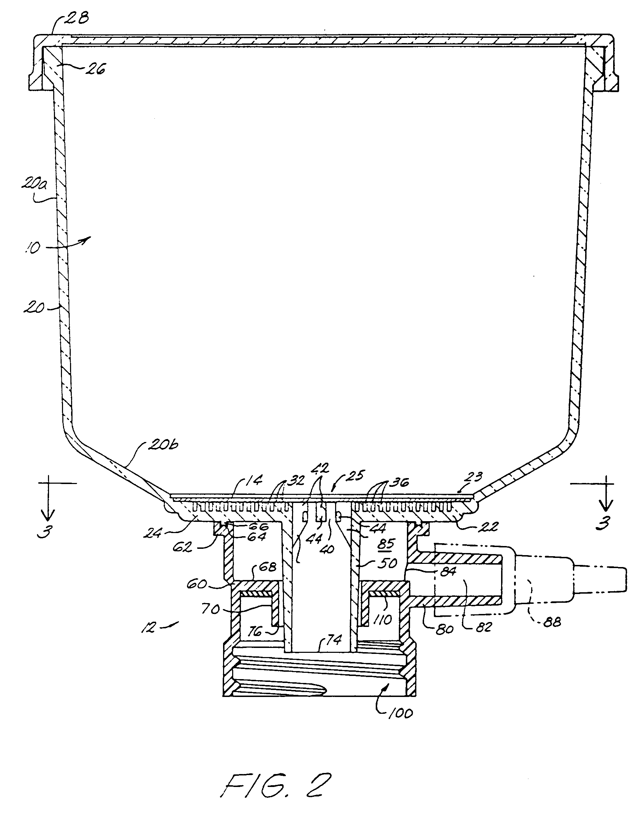

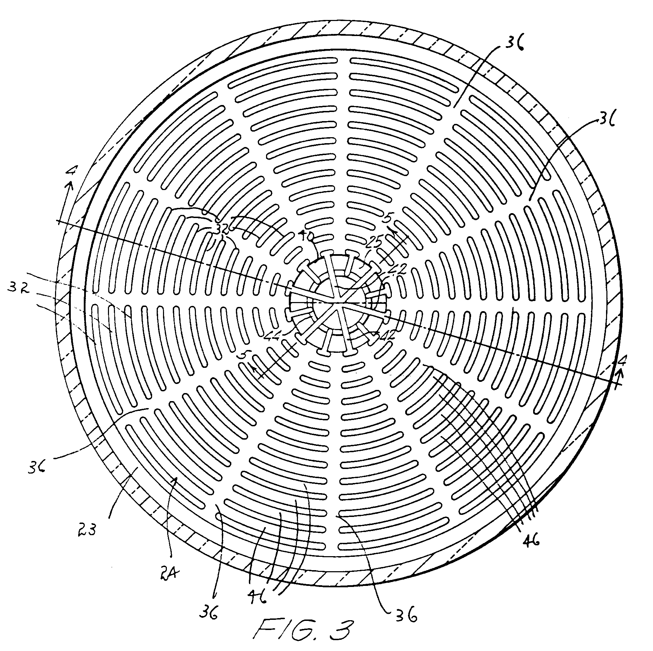

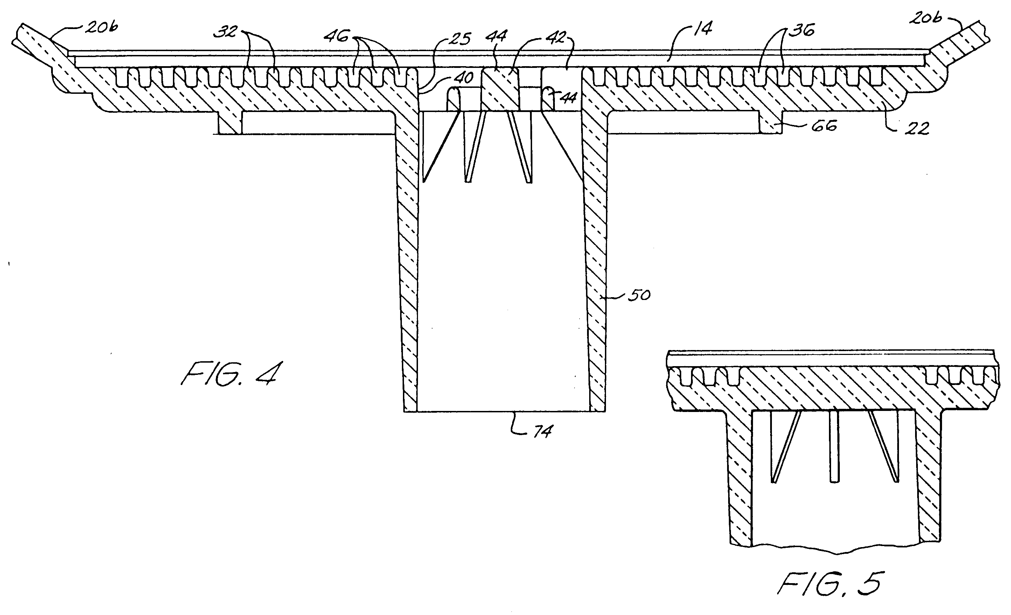

The bottle filter is essentially composed of three separately fabricated parts, namely, a funnel 10, an adapter 12 and a filter 14. The separately fabricated parts are permanently secured together to form the bottle filter assembly shown in detail in Figures 2-5. In Figure 1, the assembly is shown screwed on the media bottle B.

Funnel 10 includes a downwardly tapered side wall 20 and a horizontal bottom wall 22 integrally molded with the side wall. The side wall 20 diminishes in diameter in a downwardly direction towards the bottom wall 22 which is essentially flat. The side wall has an upper section 20a which is only slightly tapered and a lower section 20b which is much more sharply inclined to the vertical. Preferably, the upper wall section 20a bears graduations as shown in Figure 2. Typically, the side walls of sections 20a and 20b are disposed at angles of 1½° and 60° from the vertical, respectively.

A lip 26 is molded about the top edge of the tapered side wall 20, and the funnel has a coverall lid 28 which rests on small stand-offs (not shown) molded on the upper surface of the thickened lip 26. The lid 28 when positioned on the body of the funnel 10 allows air to enter the funnel under the lid while preventing debris from falling into the funnel.

As shown in FIGS.2-5, the flat bottom wall 22 of the funnel 10 is provided with a filter grid support 24 having a plurality of concentric raised ribs 32, each of which is interrupted at several locations to form a number of radially extending channels 36 which extend from the periphery 23 of the bottom wall 22 to the central portion 25 thereof. It will be noted that at the central portion 25 an opening 40 is provided which extends through the bottom wall 22. The opening 40 is spanned by a number of radial ribs 42 which are joined by an annular ring 44. Alternate radial ribs 42 cross one another at the center of the opening 40 while the other radial ribs terminate at their inner radial end at ring 44. The ribs 32 and 42 are all the same height, and they provide a grid support for filter membrane 14 which is cemented or otherwise secured in place on the top surface of the bottom wall 22 in contact with the ribs. Fluid which flows through the filter membrane 14 will enter the annual channels 46 between the annular ribs 32 and flow to the radial channels 36 and ultimately to the opening 40 at the center 25 of the bottom wall.

The filter membrane 14 may take many different forms, and the filter used, of course, is a function of the type of fluid to be filtered. The filter may typically be either an ultralow binding cellulose acetate membrane or low binding sterilizing grade polyethersulfone membrane. Many other filter materials may also be used, such as nylon, urethane, polypropylene and fiberglass. The pore sizes may typically vary from .2 and .45 microns.

A stem 50 open at its top and bottom ends is molded as an integral part of the bottom wall 22 of the funnel 10, and the upper end of the stem encompasses the opening 40. Stem 50 is concentric with the opening 40 as well as the side and bottom walls 20 and 22 of the funnel, as is evident in FIG. 2. Therefore, any fluid which flows from the upper chamber of the funnel defined by the side and bottom walls through filter 14 and opening 40 must enter and flow through stem 50.

The adapter 12 includes a cylindrical wall 60 having an L-shaped flange 62 at its upper end that defines a small channel 64. The channel receives an annular bead 66 on the bottom surface of of the bottom wall 22 of the funnel. The bead 66 is ultrasonically welded or otherwise secured in the channel 64 so as to permanently attach the adapter 12 to the lower surface of the bottom wall 22.

A divider 68 extends across the cylindrical wall 60. The divider 68 is open at its center, and a cylindrical collar 70 extends downwardly from the inner margin of the divider. When the adapter 12 is secured to the funnel 10, stem 50 extends coaxially through collar 70 and is spaced from it. It will be particularly noted in FIG. 2 that the lower edge 74 of stem 50 extends below the lower edge 76 of collar 70 for reasons which are described below.

A nipple 80 is integrally formed with the cylindrical wall 60 and extends radially outwardly from it. The nipple 80 has a central opening 82 which communicates with a port 84 in the cylindrical wall 60 so as to define a through passage to the annular chamber 85 of the adapter 12 above divider 68. The adapter nipple 80 is designed to be connected to tubing 88 which in turn will be connected to a vacuum pump (not shown) when the device is used.

An internally threaded collar 100 is also formed as an integral part of the cylindrical wall 60 of adapter 12. The internally threaded collar 100 is sized to screw onto the neck N of the standard glass media bottle B. The standard media bottle has a neck with an outer diameter of 25mm (1.000") and an externally raised thread having a width 1.02mm (.040"), height 1.27mm (.050") and pitch 0.152mm (6thds/inch).

A sealing gasket 110 is secured to the lower face of divider 68 between the cylindrical wall 50 and the collar 70. The gasket 110 is designed to engage the lip L of the bottle onto which the adapter is screwed nd form a seal with it. The seal enables a vacuum to be applied to the interior of the adapter so as to draw media or other fluid from the funnel through the filter membrance 14 and adapter 12 into the bottle or other container on which the unit is mounted.

As described above, the bottle filter of the present invention may typically be used to sterilize or clarify tissue culture media, biological fluids, additives, and other aqueous solutions. In use, the bottle filter comprising the funnel 10 and adapter 12 with the filter membrane 14 is screwed onto the container in which the sterilized or clarified fluid is to be received. The fluid is poured into funnel 10, the coverall lid 28 is placed on the funnel lip 16, and a hose 88 or other tubing is secured to nipple 80 and a vacuum pump (not shown).

As a unique feature of the present invention, the collar 100 of adapter 12 is sized to screw directly onto a standard media bottle to collect the filtered fluid. Alternatively, the adapter may, of course, be screwed onto a filter bottle which may be sold with the bottle filter and whose threaded neck is functionally the same as the neck of the standard glass media bottle.

When the vacuum is applied through hose 88, a low pressure region is established in the adapter 12, particularly in chamber 85 below bottom wall 22 of the funnel 10 and beneath filter membrane 14. Because the neck N of the bottle B is sealed to the adapter by means of the gasket 110, the vacuum may be applied beneath the filter membrane 14 in the adapter without difficulty. The low pressure in the adapter will accelerate the flow of the fluid to be filtered through filter membrane 14 into the channels 46 and 36 to the opening 40 and down the stem 50. Because the lower edge 74 of the stem 50 extends below the lower end 76 of collar 70, the fluid will drip from the bottom edge 74 of the stem directly into the container on which the bottle filter is mounted, and it will not be drawn upwardly into chamber 85 and into the tube 88.

The adapter 12 which is separately fabricated may be used with funnels of different capacity. That is, the tooling used to manufacture the adapter 12 is suitable for use in the manufacture of bottle filter assemblies of different sizes. In larger bottle filters, a larger bottom wall will be provided having a greater filter area, but so long as the stem 50 is of the same size in the different size funnels, a single size adapter may be utilized.

It will be appreciated that the threaded neck permits the user to mount the filter asembly directly onto a freshly opened media bottle when it is desired to add filtered liquid to the media so as to avoid any intermediate transfer of the filtered liquid. Alternatively, the user may use any clean standard glass media bottle with the filter assembly to collect filtered liquid for other purposes.

Having described this invention in detail, those skilled in the art will appreciate that numerous modifications may be made of this invention. For example, while in the preferred embodiment, the adapter is designed to screw onto a standard media bottle, it may alternatively be sized to screw onto the neck of the well-known Schott bottle which has a larger neck, but which is also found in large numbers in the laboratory. Therefore, it is not intended that the scope of this invention be limited to the single embodiment illustrated and described.

## Claims

1. A bottle filter assembly comprising:
a funnel (10) having a side wall (20) and a bottom wall (22) and including a stem (50), extending from about an opening (40) in the bottom wall (22), and a filter membrane grid support (24) on the bottom wall (22); a filter membrane (14) supported by the filter membrane grid support; and a unitary adaptor (12) including an internally threaded portion (100) for threadably engaging the threaded neck of a standard media bottle and outwardly extending nipple means (80) for coupling the adaptor to a vacuum source so as to assist the flow of liquid through the filter membrane, **characterised** in that the adaptor (12) is inseparably coupled directly to the funnel (10) and the funnel (10) is of unitary construction.

2. A bottle filter assembly according to claim 1, wherein the stem (50) extends through the adaptor (12) to the threaded portion (100).

3. A bottle filter assembly according to claim 2, wherein the adaptor (12) comprises a tube-like body (12) having a radially inwardly extending annular flange (68), which divides the tube-like body (12) into an upper portion (85) and a lower threaded portion (100) and defines an opening through which the stem (50) extends, and a nipple (80) extending from the upper portion (85) for coupling to a vacuum source.

4. A bottle filter assembly according to claim 1, 2 or 3, further comprising a filter membrane (14) on the support (24) for filtering fluid placed in the funnel (10) before the fluid enters the stem (50).

5. A bottle filter assembly according to any preceding claim, wherein the stem (50) forms part of the funnel (10) and is integrally moulded with the side wall (20) and the bottom wall (22).

6. A bottle filter assembly according to any preceding claim, wherein the filter membrane grid support (24) further comprises a plurality of interrupted concentric ribs (32) formed on the surface of the support (24) for directing fluid which passes through the filter to flow through the opening (40).

7. A bottle filter assembly according to any preceding claim, wherein the neck portion (100) is sized to screw onto the neck of a standard media bottle having a 33 mm diameter neck.

8. A bottle filter assembly according to claim 6, wherein the interruption of the concentric ribs (32) are radially aligned from rib to rib to form channels (36) for filtering fluid to flow to the opening (40) in the bottom wall (22).

9. A bottle filter assembly according to any preceding claim, wherein the standard media bottle is a Schott bottle.

## Patentansprüche

1. Flaschenfilteranordnung, die folgendes aufweist:
einen Trichter (10), der eine Seitenwand (20) und eine Bodenwand (22) aufweist, und eine Röhre (50), die sich von dem Umfang einer Öffnung (40) in der Bodenwand (22) aus erstreckt, und eine Filtermembrangitter-Stütze (24) auf der Bodenwand (22) enthält;
eine Filtermembran (14), die durch die Filtermembrangitter-Stütze gestützt ist; und
einen einstückigen Adapter (12) mit einem mit einem Innengewinde versehenen Abschnitt (100) zum gewindemäßigen Eingriff mit dem mit Gewinde versehenen Hals einer Standard-Medienflasche und mit einer sich nach außen erstreckenden Nippeleinrichtung (80) zum Verbinden des Adapters mit einer Vakuumquelle, um das Strömen des Fluids durch die Filtermembran zu unterstützen,
dadurch gekennzeichnet, daß
der Adapter (12) untrennbar direkt mit dem Trichter (10) verbunden ist und der Trichter (10) als Einheit aufgebaut ist.

2. Flaschenfilteranordnung nach Anspruch 1, wobei sich die Röhre (50) durch den Adapter (12) zu dem mit Gewinde versehenen Abschnitt (100) erstreckt.

3. Flaschenfilteranordnung nach Anspruch 2, wobei der Adapter (12) einen röhrenförmigen Körper (12) mit einem sich radial nach innen erstreckenden ringförmigen Flansch (68) aufweist, der den röhrenförmigen Körper (12) in einen oberen Abschnitt (85) und einen unteren mit Gewinde versehenen Abschnitt (100) teilt und eine Öffnung definiert, durch die sich die Röhre (50) erstreckt, und einen Nippel (80), der sich zur Verbindung mit einer Vakuumquelle von dem oberen Abschnitt (85) aus erstreckt.

4. Flaschenfilteranordnung nach Anspruch 1, 2 oder 3, die weiterhin auf der Stütze (24) eine Filtermembran (14) zum Filtern von Fluid aufweist, das in dem Trichter (10) plaziert ist, bevor das Fluid in die Röhre (50) eintritt.

5. Flaschenfilteranordnung nach einem der vorangehenden Ansprüche, wobei die Röhre (50) einen Teil des Trichters (10) bildet und integral mit der Seitenwand (20) und der Bodenwand (22) geformt ist.

6. Flaschenfilteranordnung nach einem der vorangehenden Ansprüche, wobei die Filtermembrangitter-Stütze (24) weiterhin eine Vielzahl unterbrochener konzentrischer Rippen (32) aufweist, die auf der Oberfläche der Stütze (24) zum derartigen Lenken des Fluids, das durch das Filter läuft, ausgebildet sind, daß es durch die Öffnung (40) fließt.

7. Flaschenfilteranordnung nach einem der vorangehenden Ansprüche, wobei der Halsabschnitt (100) derart bemaßt ist, daß er auf den Hals einer Standard-Medienflasche mit einem Halsdurchmesser von 33 mm schraubbar ist.

8. Flaschenfilteranordnung nach Anspruch 6, wobei die Unterbrechungen der konzentrischen Rippen (32) von Rippe zu Rippe radial ausgerichtet sind, um Kanäle (36) zum Filtern von Fluid zu bilden, damit es zu der Öffnung (40) in der Bodenwand (22) fließt.

9. Flaschenfilteranordnung nach einem der vorangehenden Ansprüche, wobei die Standard-Medienflasche eine Schott-Flasche ist.

## Revendications

1. Ensemble à filtre de bouteille comportant :
un entonnoir (10) ayant une paroi latérale (20) et une paroi de fond (22) et comprenant une queue (50) s'étendant depuis le pourtour d'une ouverture (40) dans la paroi de fond (22), et un support à grille (24) de membrane filtrante sur la paroi de fond (22) ; une membrane filtrante (14) supportée par le support de grille de membrane filtrante ; et un adaptateur d'un seul bloc (12) comprenant une partie filetée intérieurement (100) pour engager par vissage le col fileté d'une bouteille classique pour milieux et un moyen à raccord (80) s'étendant vers l'extérieur pour accoupler l'adaptateur à une source de vide afin d'aider à l'écoulement d'un liquide à travers la membrane filtrante, caractérisé en ce que l'adaptateur (12) est accouplé de façon inséparable directement à l'entonnoir (10) et l'entonnoir (10) est réalisé d'une seule pièce.

2. Ensemble à filtre de bouteille selon la revendication 1, dans lequel la queue (50) s'étend à travers l'adaptateur (12) jusqu'à la partie filetée (100).

3. Ensemble à filtre de bouteille selon la revendication 2, dans lequel l'adaptateur (12) comporte un corps (12) analogue à un tube ayant un rebord annulaire (68) s'étendant radialement vers l'intérieur, qui divise le corps (12) analogue à un tube en une partie supérieure (85) et une partie inférieure filetée (100) et définit une ouverture dans laquelle passe la queue (50), et un raccord (80) s'étendant depuis la partie supérieure (85) pour être accouplé à une source de vide.

4. Ensemble à filtre de bouteille selon la revendication 1, 2 ou 3, comportant en outre une membrane filtrante (14) sur le support (24) pour filtrer un fluide placé dans l'entonnoir (10) avant que le fluide entre dans la queue (50).

5. Ensemble à filtre de bouteille selon l'une quelconque des revendications précédentes, dans lequel la queue (50) fait partie de l'entonnoir (10) et vient de moulage avec la paroi latérale (20) et la paroi de fond (22).

6. Ensemble à filtre de bouteille selon l'une quelconque des revendications précédentes, dans lequel le support à grille (24) de membrane filtrante comporte en outre plusieurs nervures concentriques interrompues (32) formées sur la surface du support (24) pour diriger un fluide, qui passe à travers le filtre, afin qu'il s'écoule par l'ouverture (40).

7. Ensemble à filtre de bouteille selon l'une quelconque des revendications précédentes, dans lequel la partie de col (100) est dimensionnée pour être vissée sur le col d'une bouteille classique pour milieux ayant un col de 33 mm de diamètre.

8. Ensemble à filtre de bouteille selon la revendication 6, dans lequel les interruptions des nervures concentriques (32) sont alignées radialement d'une nervure à une autre pour former des canaux (36) faisant écouler le fluide filtré vers l'ouverture (40) dans la paroi de fond (22).

9. Ensemble à filtre de bouteille selon l'une quelconque des revendications précédentes, dans lequel la bouteille classique pour milieux est une bouteille de Schott.
